# EUROPEAN PATENT APPLICATION

(11) **EP 3 476 546 A1**
(43) Date of publication of application: **01.05.2019**
(21) Application number: 18202276.4
(22) Date of filing: 24.10.2018
(51) Int. Cl.: B25J 9/00, B25J 9/02, B25J 15/02, B25J 19/02, B25J 11/00

(54) **UNLOADING SYSTEM**

(30) Priority: 25.10.2017 CN 201711011254
(71) Applicant: Tyco Electronics (Shanghai) Co. Ltd., Shanghai (CN); TE Connectivity Corporation, Berwyn, PA 19312 (US); Kunshan League Automechanism Co., Ltd., Kunshan City Jiangsu (CN)
(72) Inventor: DENG, Yingcong, Shanghai, Shanghai 200233 (CN); ZHANG, Dandan, Shanghai, Shanghai 200233 (CN); HU, Lvhai, Shanghai, Shanghai 200233 (CN); XIE, Fengchun, Shanghai, Shanghai 200233 (CN); LIU, Yun, Shanghai, Shanghai 200233 (CN); WU, Haidong, Kunshan City, Jiangsu (CN); XIAO, Hui, Kunshan City, Jiangsu (CN); LU, Roberto Francisco-Yi, Bellvue, WA Washington 98006 (US)
(74) Representative: Grünecker Patent- und Rechtsanwälte PartG mbB

(57) **Abstract**

An unloading system includes: a rotatable table (100) configured to be rotatable about a vertical axis parallel to a vertical direction (Z); a plurality of fixing devices (200) mounted on the rotatable table around the periphery of rotatable table, and separated from each other; and a manipulator (300) adapted to grip a product (10) fixed on the fixing device and move the gripped product to a predetermined position. The rotatable table is adapted to rotate the plurality of fixing devices mounted thereon into a work area of the manipulator one by one, so that the manipulator unloads the products from the plurality of fixing devices one by one. Thereby, it improves the efficiency of unloading the product from the rotatable table.

## Description

This application claims the benefit of Chinese Patent Application No.201711011254.3 filed on October 25, 2017 in the State Intellectual Property Office of China, the whole disclosure of which is incorporated herein by reference.

### BACKGROUND OF THE INVENTION

### Field of the Invention

The present invention relates to an unloading system.

### Description of the Related Art

The assembly process of a product usually includes a number of steps. In the related art, in order to improve the assembly efficiency, the product are usually loaded on a rotatable table. The rotatable table may rotate the product loaded on it to various assembly stations to complete the assembly of the product. After the product is assembled, the assembled product is rotated by the rotatable table to an unloading station where an operator unloads the assembled product from the rotatable table and checks with his eyes whether the quality of the assembled products is qualified.

However, it is inefficient to unload the assembled product from the rotatable table manually, which reduces the efficiency of unloading the product. In addition, using eyes to inspect the product is not only inefficient but also very poor in reliability.

### SUMMARY OF THE INVENTION

The present invention has been made to overcome or alleviate at least one aspect of the above mentioned disadvantages.

According to an aspect of the present invention, there is provided an unloading system, comprising: a rotatable table configured to be rotatable about a vertical axis parallel to a vertical direction; a plurality of fixing devices mounted on the rotatable table, arranged around the periphery of rotatable table, and separated from each other; and a manipulator adapted to grip a product fixed on the fixing device and move the gripped product to a predetermined position. The rotatable table is adapted to rotate the plurality of fixing devices mounted thereon into a work area of the manipulator one by one, so that the manipulator unloads the products from the plurality of fixing devices one by one.

According to an exemplary embodiment of the present invention, the manipulator is adapted to rotate the gripped product to a predetermined pose for subsequent operations of the product.

According to another exemplary embodiment of the present invention, the manipulator is adapted to move the product in a first horizontal direction and the vertical direction; and the manipulator is also adapted to rotate the product about a horizontal axis parallel to a second horizontal direction perpendicular to the first horizontal direction.

According to another exemplary embodiment of the present invention, the manipulator comprises a moving mechanism and a gripper mounted on the moving mechanism, the gripper being adapted to grip the product, and the moving mechanism being adapted to move and rotate the gripper.

According to another exemplary embodiment of the present invention, the unloading system further comprises a sensor adapted to detect whether the product is qualified.

According to another exemplary embodiment of the present invention, the manipulator is adapted to move the product to a position below the sensor, so that a part of the product to be detected is located under the sensor and faces the sensor.

According to another exemplary embodiment of the present invention, the manipulator is mounted on a fixation frame, and the sensoris fixed on the fixation frame and does not move with the manipulator.

According to another exemplary embodiment of the present invention, the sensor comprises a non-contact distance sensor, a visual sensor or an infrared sensor.

According to another exemplary embodiment of the present invention, the product comprises a connector comprising a housing and at least one contact inserted into the housing; and the sensor comprises a non-contact distance sensor for detecting whether a depth of inserting the contact into the housing is equal to a predetermined depth.

According to another exemplary embodiment of the present invention, a plurality of contacts are inserted into the housing, and the manipulator is adapted to move the plurality of contacts one by one to a position below the sensor, so as to detect whether the depth of each contact inserted into the housing is equal to the predetermined depth.

According to another exemplary embodiment of the present invention, the sensor comprises a visual sensor for detecting whether an external appearance of the product meets a predetermined requirement.

According to another exemplary embodiment of the present invention, the product has a plurality of external appearance areas to be detected, and the manipulator is adapted to move the plurality of external appearance areas of the product one by one to a position below the sensor, so as to detect whether each external appearance area of the product meets the predetermined requirement.

According to another exemplary embodiment of the present invention, the unloading system further comprises a fixture adapted to fix the product, and the manipulator is adapted to place the product that has been detected by the sensor on the fixture.

According to another exemplary embodiment of the present invention, the unloading system further comprises a support base on which the manipulator and the fixture are mounted and supported.

In the above various exemplary embodiments of the present invention, the rotatable table is adapted to rotate the plurality of fixing devices mounted thereon into a work area of the manipulator one by one, so that the manipulator may unload the products from the plurality of fixing devices one by one. In this way, it improves the efficiency of unloading the product from the rotatable table.

### BRIEF DESCRIPTION OF THE DRAWINGS

The above and other features of the present invention will become more apparent by describing in detail exemplary embodiments thereof with reference to the accompanying drawings, in which:
Fig.1 is an illustrative perspective view of an unloading system according to an embodiment of the present invention; and
Fig.2 is an illustrative perspective view of a manipulator, a sensor, and a fixture of the unloading system of Fig.1.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided an unloading system, comprising: a rotatable table configured to be rotatable about a vertical axis parallel to a vertical direction; a plurality of fixing devices mounted on the rotatable table, arranged around the periphery of rotatable table, and separated from each other; and a manipulator adapted to grip a product fixed on the fixing device and move the gripped product to a predetermined position. The rotatable table is adapted to rotate the plurality of fixing devices mounted thereon into a work area of the manipulator one by one, so that the manipulator unloads the products from the plurality of fixing devices one by one.

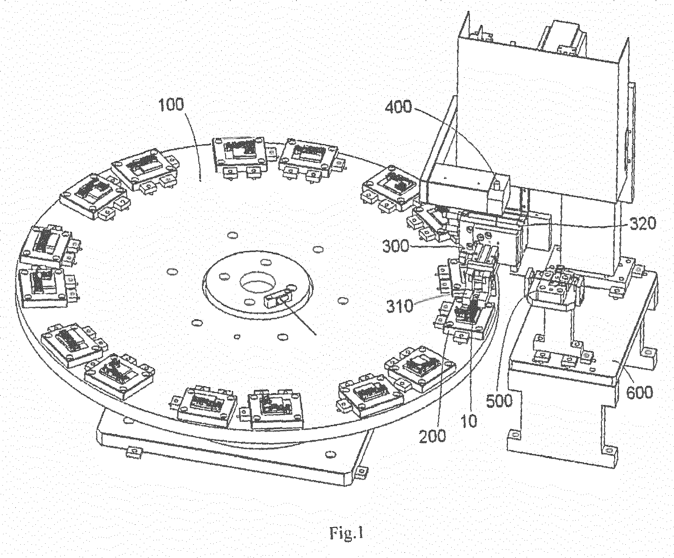

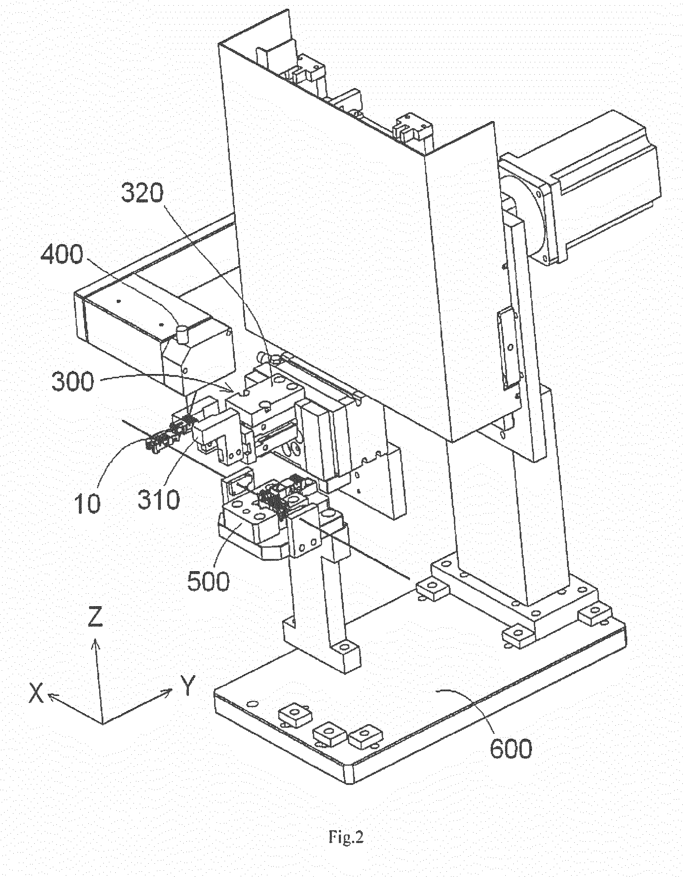

Fig.1 is an illustrative perspective view of an unloading system according to an embodiment of the present invention; and Fig.2 is an illustrative perspective view of a manipulator 300, a sensor 400, and a fixture 500 of the unloading system of Fig.1.

As shown in Figs.1-2, in an embodiment, the unloading system mainly comprises a rotatable table 100, a plurality of fixing devices 200, and a manipulator 300. The rotatable table 100 is configured to be rotatable about a vertical axis parallel to a vertical direction Z. The plurality of fixing devices 200 are mounted on the rotatable table 100, arranged around the periphery of rotatable table 100, and separated from each other. The manipulator 300 is adapted to grip a product 10 fixed on the fixing device 200 and move the gripped product 10 to a predetermined position.

As shown in Figs. 1-2, in an embodiment, the rotatable table 100 is adapted to rotate the plurality of fixing devices 200 mounted thereon into a work area of the manipulator 300 one by one, so that the manipulator 300 unloads the products 10 from the plurality of fixing devices 200 on the rotatable table 100 one by one.

As shown in Figs.1-2, in an embodiment, the manipulator 300 is also adapted to rotate the gripped product 10 to a predetermined pose for subsequent operations of the product 10.

As shown in Figs. 1-2, in an embodiment, the manipulator 300 is adapted to move the product 10 in a first horizontal direction X and the vertical direction Z. The manipulator 300 is also adapted to rotate the product 10 about a horizontal axis parallel to a second horizontal direction Y perpendicular to the first horizontal direction X.

As shown in Figs.1-2, in an embodiment, the manipulator 300 comprises a moving mechanism 320 and a gripper 310 mounted on the moving mechanism 320. The gripper 310 is adapted to grip the product 10, and the moving mechanism 320 is adapted to move and rotate the gripper 310.

As shown in Figs.1-2, in an embodiment, the unloading system further comprises a sensor 400 adapted to detect whether the product 10 is qualified.

As shown in Figs. 1-2, in an embodiment, in order to detect the quality of the product 10, the manipulator 300 is adapted to move the product 10 to a position below the sensor 400, so that a part of the product 10 to be detected is located under the sensor 400 and faces the sensor 400.

As shown in Figs. 1-2, in an embodiment, the manipulator 300 is mounted on a fixation frame, and the sensor 400 is fixed on the fixation frame. Thereby, the sensor 400 does not move with the manipulator 300.

In an exemplary embodiment of the present invention, different types of sensors 400 may be selected depending on the detection tasks. For example, the sensor 400 may comprise a non-contact distance sensor, a visual sensor or an infrared sensor.

As shown in Figs. 1-2, in an embodiment, the product 10 to be detected may comprise a connector. The connector comprises a housing and at least one contact inserted into the housing. In this case, the sensor 400 may comprise a non-contact distance sensor for detecting whether a depth of inserting the contact into the housing is equal to a predetermined depth.

As shown in Figs.1-2, in an embodiment, a plurality of contacts are inserted into the housing, and the manipulator 300 is adapted to move the plurality of contacts one by one to a position below the sensor 400, so as to detect whether the depth of each contact inserted into the housing is equal to the predetermined depth.

As shown in Figs.1-2, in another embodiment, the sensor 400 may be a visual sensor for detecting whether an external appearance of the product 10 meets a predetermined requirement. For example, the sensor 400 may comprise a camera.

As shown in Figs.1-2, in another embodiment, the product 10 may have a plurality of external appearance areas to be detected, and the manipulator 300 is adapted to move the plurality of external appearance areas of the product 10 one by one to a position below the sensor 400, so as to detect whether each external appearance area of the product 10 meets the predetermined requirement.

As shown in Figs. 1-2, in an embodiment, the unloading system further comprises a fixture 500 adapted to fix the product 10. The manipulator 300 further is adapted to place the product 10 that has been detected by the sensor 400 on the fixture 500. Then, a robot (not shown) may take away the product 10 form the fixture 500 for the next procedure, for example, the robot may assemble the qualified product 10 onto a circuit board, or discard the unqualified product into a waste recycling box.

As shown in Figs. 1-2, in an embodiment, the unloading system further comprises a support base 600. The manipulator 300 and the fixture 500 are mounted and supported on the support base 600.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. An unloading system, comprising:
a rotatable table (100) configured to be rotatable about a vertical axis parallel to a vertical direction (Z);
a plurality of fixing devices (200) mounted on the rotatable table (100) around the periphery of rotatable table (100), and separated from each other; and
a manipulator (300) adapted to grip a product (10) fixed on the fixing device (200) and move the gripped product (10) to a predetermined position,
**characterized in that**, the rotatable table (100) is adapted to rotate the plurality of fixing devices (200) mounted thereon into a work area of the manipulator (300) one by one, so that the manipulator (300) unloads the products (10) from the plurality of fixing devices (200) one by one.

2. The unloading system according to claim 1,
wherein the manipulator (300) is adapted to rotate the gripped product (10) to a predetermined pose for subsequent operations of the product (10).

3. The unloading system according to claim 2,
wherein the manipulator (300) is adapted to move the product (10) in a first horizontal direction (X) and the vertical direction (Z); and
wherein the manipulator (300) is also adapted to rotate the product (10) about a horizontal axis parallel to a second horizontal direction (Y) perpendicular to the first horizontal direction (X).

4. The unloading system according to claim 2 or 3,
wherein the manipulator (300) comprises a moving mechanism (320) and a gripper (310) mounted on the moving mechanism (320), the gripper (310) being adapted to grip the product (10), and the moving mechanism (320) being adapted to move and rotate the gripper (310).

5. The unloading system according to claim 2 or 3, further comprising:
a sensor (400) adapted to detect whether the product (10) is qualified.

6. The unloading system according to claim 5,
wherein the manipulator (300) is adapted to move the product (10) to a position below the sensor (400), so that a part of the product (10) to be detected is located under the sensor (400) and faces the sensor (400).

7. The unloading system according to claim 6,
wherein the manipulator (300) is mounted on a fixation frame, and the sensor (400) is fixed on the fixation frame and does not move with the manipulator (300).

8. The unloading system according to claim any one of claims 5-7,
wherein the sensor (400) comprises a non-contact distance sensor, a visual sensor or an infrared sensor.

9. The unloading system according to any one of claims 5-8,
wherein the product (10) comprises a connector comprising a housing and at least one contact inserted into the housing; and
wherein the sensor (400) comprises a non-contact distance sensor for detecting whether a depth of inserting the contact into the housing is equal to a predetermined depth.

10. The unloading system according to claim 9,
wherein a plurality of contacts are inserted into the housing, and the manipulator (300) is adapted to move the plurality of contacts one by one to a position below the sensor (400), so as to detect whether the depth of each contact inserted into the housing is equal to the predetermined depth.

11. The unloading system according to any one of claims 5-10,
wherein the sensor (400) comprises a visual sensor for detecting whether an external appearance of the product (10) meets a predetermined requirement.

12. The unloading system according to claim 11,
wherein the product (10) has a plurality of external appearance areas to be detected, and the manipulator (300) is adapted to move the plurality of external appearance areas of the product (10) one by one to a position below the sensor (400), so as to detect whether each external appearance area of the product (10) meets the predetermined requirement.

13. The unloading system according to any one of claims 5-12, further comprising:
a fixture (500) adapted to fix the product (10),
wherein the manipulator (300) is adapted to place the product (10) that has been detected by the sensor (400) on the fixture (500).

14. The unloading system according to claim 13, further comprising:
a support base (600) on which the manipulator (300) and the fixture (500) are mounted and supported.
